# EUROPEAN PATENT SPECIFICATION

(11) **EP 0 548 749 B1**
(45) Date of publication and mention of the grant of the patent: **03.04.1996**
(21) Application number: 92121305.4
(22) Date of filing: 15.12.1992
(51) Int. Cl.: H02J 7/10, H02J 7/02

(54) **Electronic circuit for direct-current feed to electrical loads, particularly storage batteries for electric vehicles**
Elektronische Schaltung zum Speisen von Ladestrom, insbesondere Speicherbatterie für Elektrofahrzeug
Circuit électronique d'alimentation à courant continu pour charges électriques et spécialement pour véhicule à propulsion électrique à alimentation par accumulateurs

(30) Priority: 24.12.1991 IT TO911038
(43) Date of publication of application: 30.06.1993
(73) Proprietor: FIAT AUTO S.p.A., I-10135 Torino (IT)
(72) Inventor: Guerzoni, Roberto, I-10045 Piossasco (Torino) (IT); Varrone, Piergiorgio, I-10025 Pino Torinese (Torino) (IT)
(74) Representative: Lotti, Giorgio

(56) References cited:
- EP-A- 0 226 128
- EP-A- 0 390 079
- EP-A- 0 443 342
- WO-A-90/03059
- CA-A- 1 271 519
- US-A- 4 682 262
- US-A- 5 063 489
- EDN ELECTRICAL DESIGN NEWS. vol. 34, no. 212, 12 October 1989, NEWTON, MASSACHUSETTS US pages 75 - 77 ORMOND 'Units suit power needs around the world'

## Description

This invention relates to an electronic circuit for direct-current feed to electrical loads, particularly storage batteries for electric vehicles.

The continually increasing interest in electrically driven vehicles and the prediction of an increasingly more widespread use have resulted in an urgent requirement for simple and economical devices for recharging the storage batteries of such vehicles. As the capacity of the storage batteries usually used in autotraction is very high, the circuits used in conventional battery chargers are generally poorly suitable for this purpose. In this respect, costly and complicated circuits are normally required to deliver and control the considerable current flowing during recharging, but these are hardly suitable for use by the final vehicle user in connection with the normal domestic electricity mains.

In this regard, it is very important not only to ensure battery protection but also to protect the supply mains against violent transients which could result from the delivery of such high power.

The document US-A-5 063 489 discloses a switching regulator for the direct current feed of electrical loads where a primary of a transformer is connected via a switching transistor to a rectified AC line voltage. The transistor is controlled by a pulse width modulator as a function of the transformer secondary voltage. The switching regulator has a switching control arrangement, which is provided with an optical coupler and an A-D converter, where the A-D converter provides said optical coupler with a digital error signal, in order to obtain a stable DC output from said switching regulator.

An object of the present invention is to provide an electronic circuit for the direct-current feed of electrical loads, particularly storage batteries for electric vehicles, of the stated type and for the stated applications, which is simple, of low cost and high efficiency, and which enables considerable electric power to be delivered and controlled. A further object of the present invention is to provide an electronic circuit which does not give rise to strong transients in the supply mains on connecting and/or disconnecting the mains, and which absorbs current of equal form to the voltage from the mains without phase displacement.

These objects are attained by an electronic circuit for the direct-current feed of electrical loads, particularly storage batteries for electric vehicles, according to claim 1.

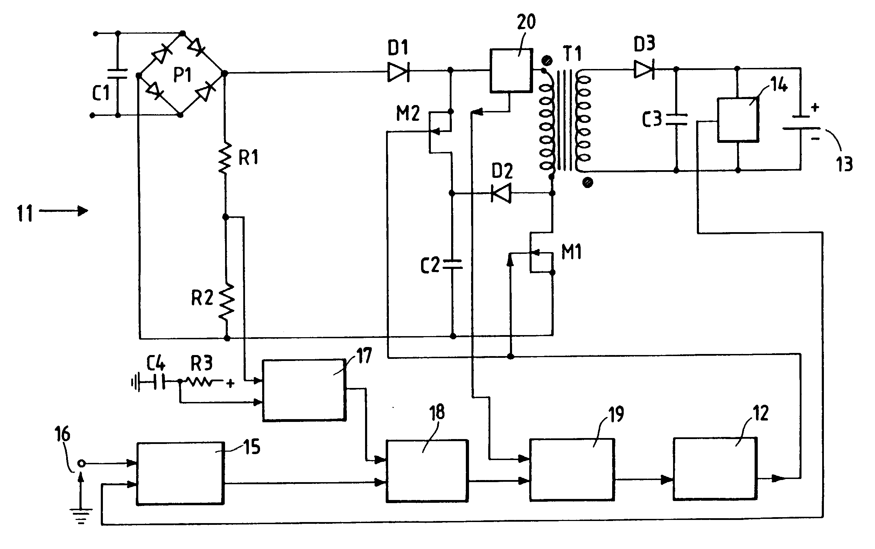

The structural and operational characteristics and advantages of a circuit according to the present invention will be more apparent from the description of a non-limiting enmbodiment thereof given hereinafter with reference to the accompanying figure, which shows a circuit scheme according to the present invention.

With reference to the accompanying figure, an electronic circuit for direct-current feed to electrical loads is indicated overall by 11.

In parallel with the mains supply there is connected a diode bridge P1 with a first filter capacitor C1. The diode bridge P1 is connected to a first end of the primary winding of a transformer T1 via a first diode D1 and a first transistor M1.

The circuit 11 comprises a PWM 12, to the output of which there is connected the gate of the transistor M1. The gate of a second transistor M2 is also connected, following galvanic isolation, to the output of the PWM 12. The connection of the transformer T1 is of flyback type.

The drain and source of the first transistor M1 are connected to the diode bridge P1 and to a second end of the primary winding of the transformer T1 respectively.

The drain of the second transistor M2 is connected, in series with the diode D1, to the diode bridge P1.

A second diode D2 is connected between the source of the transistor M1 and the source of the transistor M2, and a second capacitor C2 is connected between the drain of the transistor M1 and the source of the transistor M2.

In a preferred embodiment the transistors M1 and M2 are of MOSFET type.

In a second preferred embodiment the transistors M1 and M2 are of BJT type.

The secondary winding of the transformer T1 is connected via a third diode D3 to an external load 13, for example represented by a storage battery. A third filter capacitor C3 and a voltmeter 14 are connected in parallel with the external load 13. The measured voltage of the voltmeter 14 and a reference voltage 16 are applied to the inputs of a first differential integrator 15. The differential integrator integrates the difference between the voltage measured by the voltmeter 14 and the reference voltage 16, using a time constant much greater than the half-period of the mains supply. One of the two inputs of a first multiplier 17 is connected, via a voltage divider consisting of two resistors R1 and R2, to the output of the diode bridge P1, which is also connected to the source electrode of the first transistor M1. The second of the two inputs of the multiplier 17 is connected in parallel with a fourth capacitor C4 connected to the circuit power supply via a resistor R3. The output of the multiplier 17 and the output of the differential integrator 15, representing the error between the actual value and the considered value of the output voltage, are applied to the inputs of a second multiplier 18.

The output voltage of the multiplier 18 and a voltage proportional to the current circulating through the primary winding of the transformer T1 are applied to the inputs of a second differential integrator 19. The current circulating through the primary winding of the transformer T1 is measured by an ammeter 20 connected in series with the primary winding of the transformer T1.

The differential integrator 19 integrates the difference between the output voltage of the multiplier 18 and the voltage proportional to the current circulating through the primary winding of the transformer T1, using a time constant which is much less than the half-period of the mains supply.

The output of the differential integrator 19 is connected to the input of the PWM 12.

It will be appreciated that in this manner, using only one PWM and one transformer plus a few further very low-cost components, a circuit is achieved able to control powers even of the order of some kilowatts.

It will be further appreciated that there are no inductors or capacitors connected downstream of the diode bridge.

The circuit 11 operates as follows.

On switching on, the voltage across C4 increases gradually from zero to a maximum value, with a time constant and gain defined by the value of the resistor R3 and the value of the capacitor C4.

The voltage across C4 is multiplied in the multiplier 17 by the voltage withdrawn from the diode bridge P1, which is of semisinusoidal form at mains frequency.

Consequently the output of the multiplier 17 is a semisinusoidal voltage at mains frequency with gradually increasing amplitude.

As the multiplier 18 multiplies this voltage by the output of the differential integrator 15, the output voltage of the multiplier 18 is semisinusoidal at mains frequency, with its amplitude gradually increasing and proportional to the error between the actual value and the desired value of the output voltage. As the time constant of the differential integrator 19 is much less than the duration of the half-period of the mains supply, a modulated voltage with the same form as the mains supply is present at the input of the PWM 12.

Hence by virtue of the action of the differential integrator 19, the PWM 12 regulates the amplitude of the control pulses of the transistors M1 and M2 such that the current circulating through the primary winding of the transformer T1 has the same form as the mains voltage.

In contrast, by virtue of the action of the differential integrator 15, the PWM 12 regulates the amplitude of the control pulses of the transistors M1 and M2 such that the current circulating through the primary winding of the transformer T1 has the amplitude required to sustain the external load 13.

It will be appreciated that, by virtue of such a configuration, the circuit 11 absorbs from the mains a current which is always of form identical to the respective voltage, even when the voltage is not of sinusoidal form, this being also valid during connection transients and independently of load variations.

By the effect of the capacitor C4 positioned at the input of the multiplier 17, the current withdrawn from the mains increases slowly, on switching on, from zero to the rated value.

It will be apparent that in this manner the load is applied to the mains gradually without producing overloading.

The ondulation present at the terminals to which the external load 13 is connected is at double the mains frequency, and can be reduced to the desired value by suitably sizing the capacity of the capacitor C3.

The chopper frequency disturbance to the supply mains can be filtered using a low-capacity capacitor C1 as the inductance of the primary winding of the transformer T1 at chopper frequency is high.

The efficiency of the circuit 11 is very high.

In this respect, when the transistors M1 and M2 are inhibited by the PWM 12, the diode D2 charges the capacitor C2. Consequently, when the PWM 12 switches the transistors M1 and M2 to conduction, the capacitor C2 discharges across the transformer T1, to allow recovery of the energy accumulated within the capacitor C2.

Again, because of the configuration, the energy accumulated by the dispersed flux of the transformer T1 during the inhibition of the transistors M1 and M2 contributes to further charging the capacitor C2. The capacitor C2 then completely returns this energy during the next chopper cycle, ie during the conduction of the transistors M1 and M2.

The fact that the peak current circulating through the primary winding and secondary winding of the transformer T1 has an amplitude equal to one half that of traditional circuits contributes to further increasing the efficiency of the circuit 11. In this respect, as is well known, Joule effect losses are proportional to the square of the current. This is due to the relatively high value of the primary inductance of T1, the energy of which, between one M1 and M2 conduction and the next, is never completely transferred to the secondary, so creating a permanent flux within the core.

In this manner, when M1 and M2 go into conduction, the current within the primary of T1 rises in steps to create the ampere-turns corresponding to the residual flux of the core, so that the current within the secondary does not reach zero at the end of transfer (M1 and M2 inhibition period). Consequently, from the transistor viewpoint, the circuit behaves as a forward converter, but from the viewpoint of the secondary voltage variability and the absence of filter inductance, it also maintains its flyback advantages.

## Claims

1. An electronic circuit (11) for the direct-current feed of electrical loads, particularly storage batteries for electric vehicles, comprising a diode bridge (P1) the first output connection of which is connected via a first diode (D1) to a first end of the primary winding of a transformer (T1) having its secondary winding connected via a third diode (D3) to an external load (13) in parallel with a third filter capacitor (C3), said circuit comprises a PWM (12) having its input connected to the output of a second differential integrator (19) and its output to the control electrodes of a first transistor (M1) and a second transistor (M2), the second controlled electrode and first controlled electrode of said first transistor (M1) being connected to the second output connection of said diode bridge (P1) and to the second end of said primary winding of said transformer (T1) respectively, the second controlled electrode of said second transistor (M2) being connected to the first end of the primary winding of the transformer T1, the first controlled electrode of said first transistor (M1) is connected via a second diode (D2) with the first controlled electrode of said second transistor (M2), and the second controlled electrode of said first transistor (M1) and the first controlled electrode of said second transistor (M2) being connected together via a second capacitor (C2), a first input of said second differential integrator (19) is connected to the output of an ammeter (20) connected in series with said primary winding of said transformer (T1), a second input of said second differential integrator (19) being connected to the output of a second multiplier circuit (18) having two inputs, where the first input of said second multiplier circuit (18) is connected to said diode bridge (P1) via a first multiplier circuit (17) having a first of its two inputs connected to the output of a resistive voltage divider (R1,R2), which is connected to the output connections of said diode bridge (P1) and the second input of said first multiplier (17) is connected to a fourth capacitor (C4) having a gradually increasing voltage when the power supply is switched on and a second input of said second multiplier circuit (18) is connected to the output of a first differential integrator (15) with two inputs connected respectively to a voltmeter (14) connected in parallel with said external load (13), and to an external reference voltage generator (16).

2. An electronic circuit as claimed in claim 1, characterised in that the fourth capacitor (C4) is connected to the power feed of the control circuit via a third resistor (R3).

3. An electronic circuit as claimed in claim 1, characterised in that the time constant of said second differential integrator (19) is much smaller than the half-period of the mains supply.

4. An electronic circuit as claimed in claim 1, characterised in that the time constant of said first differential integrator (15) is much greater than the half-period of the mains supply.

5. An electronic circuit as claimed in claim 1, characterised in that a first capacitor (C1) is connected in parallel with the input of said diode bridge (P1).

6. An electronic circuit as claimed in claim 1, characterised in that said first transistor (M1) and said second transistor (M2) are MOSFET transistors.

7. An electronic circuit as claimed in claim 1, characterised in that said first transistor (M1) and said second transistor (M2) are bipolar junction transistors.

8. An electronic circuit as claimed in claim 1, characterised in that the chopper frequency disturbance to the supply mains is filtered by means of a first capacitor (C1) having a low-capacity value to compensate the high-inductance value of said primary winding of said transformer (T1) at said chopper frequency.

9. An electronic circuit as claimed in claim 1, characterised in that said first (M1) and said second (M2) transistor are activated by said PWM (12), which inhibits said transistors (M1, M2) to charge said second capacitor (C2) by means of said second diode (D2) and switches said transistors (M1, M2) to discharge said second capacitor (C2) across said transformer (T1).

10. An electronic circuit as claimed in claim 9, wherein the second capacitor (C2) also forms the snubber circuit for said first transistor (M1), via said second diode (D2), conceptually of "non-dissipative" type.

## Patentansprüche

1. Elektronische Schaltung (11) zur Gleichstromspeisung von elektrischen Lasten, insbesondere von Speicherbatterien für elektrische Fahrzeuge, umfassend: eine Diodenbrücke (P1), deren erste Ausgangsverbindung über eine erste Diode (D1) mit einem ersten Ende der Primärwicklung eines Transformators (T1) verbunden ist, dessen Sekundärwicklung über eine dritte Diode (D3) mit einer externen Last (13) parallel mit einem dritten Filterkondensator (C3) verbunden ist, wobei die Schaltung umfaßt: einen PWM (12), dessen Eingang mit dem Ausgang eines zweiten differentiellen Integrators (19) verbunden ist und dessen Ausgang mit den Steuerelektroden eines ersten Transistors (M1) und eines zweiten Transistors (M2) verbunden ist, wobei die zweite gesteuerte Elektrode und die erste gesteuerte Elektrode des ersten Transistors (M1) mit der zweiten Ausgangsverbindung der Diodenbrücke (P1) bzw. mit dem zweiten Ende der Primärwicklung des Transformators (T1) verbunden ist, wobei die zweite gesteuerte Elektrode des Transistors (M2) mit dem ersten Ende der Primärwicklung des Transformators (T1) verbunden ist, die erste gesteuerte Elektrode des ersten Transistors (M1) über eine zweite Diode (D2) mit der ersten gesteuerten Elektrode des zweiten Transistors (M2) verbunden ist, und die zweite gesteuerte Elektrode des ersten Transistors (M1) und die erste gesteuerte Elektrode des zweiten Transistors (M2) über einen Kondensator (C2) zusammengeschaltet sind, ein erster Eingang des zweiten differentiellen Integrators (19) mit dem Ausgang eines Ammeters (20) verbunden ist, welches in Reihe zu der Primärwicklung des Transformators (T1) geschaltet ist, eine zweiter Eingang des zweiten differentiellen Integrators (19) mit dem Ausgang einer zweiten Multipliziererschaltung (18) mit zwei Eingängen verbunden ist, wobei der erste Eingang der zweiten Multipliziererschaltung (18) mit der Diodenbrücke (P1) über eine erste Multipliziererschaltung (17) verbunden ist, wobei ein erster Eingang von ihren zwei Eingängen mit dem Ausgang eines Widerstandsspannungsteilers (R1, R2) verbunden ist, der mit den Ausgangsverbindungen der Diodenbrücke (P1) verbunden ist, und der zweite Eingang des ersten Multiplizierers (17) mit einem vierten Kondensator (C4) verbunden ist, der eine allmählich ansteigende Spannung aufweist, wenn die Energievesorgung eingeschaltet wird, und ein zweiter Eingang der Multipliziererschaltung (18) mit dem Ausgang eines ersten differentiellen Integrators (15) mit zwei Eingängen verbunden ist, die jeweils mit einem parallel zu der externen Last (13) geschalteten Voltmeter (14) bzw. einem externen Referenzspannungsgenerator (16) verbunden sind.

2. Elektronische Schaltung nach Anspruch 1,
dadurch **gekennzeichnet,** daß der vierte Kondensator (C4) mit der Energiespeisung der Steuerschaltung über einen dritten Widerstand (R3) verbunden ist.

3. Elektronische Schaltung nach Anspruch 1,
dadurch **gekennzeichnet,** daß die Zeitkonstante des zweiten differentiellen Integrators (19) viel kleiner als die Halbperiode der Netzversorgung ist.

4. Elektronische Schaltung nach Anspruch 1,
dadurch **gekennzeichnet,** daß die Zeitkonstante des ersten differentiellen Integrators (15) viel größer als die Halbperiode der Netzversorgung ist.

5. Elektronische Schaltung nach Anspruch 1,
dadurch **gekennzeichnet,** daß ein erster Kondensator (C1) parallel zu dem Eingang der Diodenbrücke (P1) geschaltet ist.

6. Elektronische Schaltung nach Anspruch 1,
dadurch **gekennzeichnet,** daß der erste Transistor (M1) und der zweite Transistor (M2) MOSFET-Transistoren sind.

7. Elektronische Schaltung nach Anspruch 1,
dadurch **gekennzeichnet,** daß der erste Transistor (M1) und der zweite Transistor (M2) Bipolarflächentransistoren sind.

8. Elektronische Schaltung nach Anspruch 1,
dadurch **gekennzeichnet,** daß die Chopperfrequenzstörung an dem Versorgungsnetz mittels eines ersten Kondensators (C1) gefiltert wird, der einen niedrigen Kapazitätswert aufweist, um den hohen Induktivitätswert der Primärwicklung des Transformators (T1) bei der Chopperfrequenz zu kompensieren.

9. Elektronische Schaltung nach Anspruch 1,
dadurch **gekennzeichnet,** daß der erste (M1) und der zweite (M2) Transistor durch den PWM (12) aktiviert werden, der die Transistoren (M1, M2) zum Laden des zweiten Kondensators (C2) mittels der zweiten Diode (D2) sperrt und die Transistoren (M1, M2) zum Entladen des zweiten Kondensators (C2) über den Transformator (T1) schaltet.

10. Elektronische Schaltung nach Anspruch 9,
dadurch **gekennzeichnet,** daß der zweite Kondensator (C2) auch die Dämpfungsschaltung für den ersten Transistor (M1), über die zweite Diode (D2) konzeptionell vom "nicht-dissipativen" Typ bildet.

## Revendications

1. Circuit électronique (11) pour l'alimentation en courant continu de charges électriques, en particulier des batteries d'accumulateurs pour des véhicules électriques, comprenant un pont de diodes (P1) dont la première connexion de sortie est connectée par l'intermédiaire d'une première diode (D1) à une première extrémité de l'enroulement primaire d'un transformateur (T1) dont l'enroulement secondaire est connecté par l'intermédiaire d'une troisième diode (D3) à une charge externe (13) en parallèle avec un troisième condensateur de filtrage (C3), ce circuit comprenant un modulateur d'impulsions en largeur (MIL) (12) dont l'entrée est connectée à la sortie d'un second intégrateur différentiel (19) et dont la sortie est connectée aux électrodes de commande d'un premier transistor (M1) et d'un second transistor (M2), la seconde électrode commandée et la première électrode commandée du premier transistor (M1) étant respectivement connectées à la seconde connexion de sortie du pont de diodes (P1) et à la seconde extrémité de l'enroulement primaire du transformateur (T1), la seconde électrode commandée du second transistor (M2) étant connectée à la première extrémité de l'enroulement primaire du transformateur (T1), tandis que la première électrode commandée du premier transistor (M1) est connectée par l'intermédiaire d'une seconde diode (D2) à la première électrode commandée du second transistor (M2), et la seconde électrode commandée du premier transistor (M1) et la première électrode commandée du second transistor (M2) étant connectées ensemble par l'intermédiaire d'un second condensateur (C2), une première entrée du second intégrateur différentiel (19) étant connectée à la sortie d'un ampèremètre (20) connecté en série avec l'enroulement primaire du transformateur (T1), une seconde entrée du second intégrateur différentiel (19) étant connectée à la sortie d'un second circuit multiplicateur (18) ayant deux entrées, avec une configuration dans laquelle la première entrée du second circuit multiplicateur (18) est connectée au pont de diodes (P1) par l'intermédiaire d'un premier circuit multiplicateur (17) ayant une première de ses deux entrées connectée à la sortie d'un diviseur de tension résistif (R1, R2), qui est connecté aux connexions de sortie du pont de diodes (P1), tandis que la seconde entrée du premier multiplicateur (17) est connectée à un quatrième condensateur (C4) ayant une tension progressivement croissante lorsque l'alimentation est mise en fonction, et une seconde entrée de ce circuit multiplicateur (18) est connectée à la sortie d'un premier intégrateur différentiel (15) ayant deux entrées qui sont respectivement connectées à un voltmètre (14) connecté en parallèle avec la charge externe (13), et à un générateur de tension de référence externe (16).

2. Circuit électronique selon la revendication 1, caractérisé en ce que le quatrième condensateur (C4) est connecté à l'alimentation du circuit de commande par l'intermédiaire d'une troisième résistance (R3).

3. Circuit électronique selon la revendication 1, caractérisé en ce que la constante de temps du second intégrateur différentiel (19) est très inférieure à la demi-période de l'alimentation par le secteur.

4. Circuit électronique selon la revendication 1, caractérisé en ce que la constante de temps du premier intégrateur différentiel (15) est très supérieure à la demi-période de l'alimentation par le secteur.

5. Circuit électronique selon la revendication 1, caractérisé en ce qu'un premier condensateur (C1) est connecté en parallèle à l'entrée du pont de diodes (P1).

6. Circuit électronique selon la revendication 1, caractérisé en ce que le premier transistor (M1) et le second transistor (M2) sont des transistors MOS à effet de champ.

7. Circuit électronique selon la revendication 1, caractérisé en ce que le premier transistor (M1) et le second transistor (M2) sont des transistors bipolaires à jonctions.

8. Circuit électronique selon la revendication 1, caractérisé en ce que la perturbation à la fréquence de découpage qui est occasionnée au secteur est filtrée au moyen d'un premier condensateur (C1) ayant une valeur de capacité faible, pour compenser la valeur d'inductance élevée de l'enroulement primaire du transformateur (T1) à la fréquence de découpage.

9. Circuit électronique selon la revendication 1, caractérisé en ce que les premier (M1) et second (M2) transistors sont activés par le modulateur d'impulsions en largeur (12), qui empêche ces transistors (M1, M2) de charger le second condensateur (C2) au moyen de la seconde diode (D2), et qui commute les transistors (M1, M2) pour décharger le second condensateur (C2) dans le transformateur (T1).

10. Circuit électronique selon la revendication 9, dans lequel le second condensateur (C2) forme également le circuit amortisseur pour le premier transistor (M1), par l'intermédiaire de la seconde diode (D2), ce circuit amortisseur étant conçu suivant un type "non dissipatif".
